# EUROPÄISCHE PATENTSCHRIFT

(11) **EP 2 554 405 B1**
(45) Veröffentlichungstag und Bekanntmachung des Hinweises auf die Patenterteilung: **14.09.2016**
(21) Anmeldenummer: 12176848.5
(22) Anmeldetag: 18.07.2012
(51) Int. Cl.: B60C 11/03, B60C 11/12

(54) **Laufstreifenprofil eines Fahrzeugluftreifens**
Tread profile of a vehicle tyre
Profil de bande de roulement d´un pneu de véhicule

(30) Priorität: 01.08.2011 DE 102011052315
(43) Veröffentlichungstag der Anmeldung: 06.02.2013
(73) Patentinhaber: Continental Reifen Deutschland GmbH, 30165 Hannover (DE)
(72) Erfinder: Rittweger, Stefan, 30163 Hannover (DE)
(74) Vertreter: Finger, Karsten

(56) Entgegenhaltungen:
- EP-A1- 0 618 092
- WO-A1-01/60641

## Beschreibung

Die Erfindung betrifft ein Laufstreifenprofil eines Fahrzeugluftreifens mit über den Umfang des Reifens erstreckten Profilbändern - wie zum Beispiel Umfangsrippen oder Profilblockreihen -, welche zwischen zwei Umfangsrillen angeordnet sind, wobei ein Profilband in axialer Richtung A zu einer das Profilband begrenzenden Umfangsrille jeweils von einer Flanke begrenzt ist, welche die zum Profilband weisende Rillenwand der Umfangsrille bildet, und wobei das Profilband in radialer Richtung R nach außen hin von einer die Bodenkontaktoberfläche bildenden radial äußeren Oberfläche begrenzt ist, mit von Umfangsrille zu Umfangsrille erstreckten Feineinschnitten in der radial äußeren Oberfläche zumindest eines Profilbandes.

Derartige Fahrzeugluftreifen sind bekannt.

Derartige Fahrzeugluftreifen sind bekannt. So ist beispielsweise von Winterreifen bekannt, in Profilelementen Feineinschnitte auszubilden, die sich quer durch das Profilelement hindurch erstrecken. Derartige Feineinschnitte sind häufig geradlinig ausgebildet und erstrecken sich über das gesamte Profilblockelement hinweg, um auf diese Weise eine große Öffnung beim Durchlaufen des Reifenlatsches zu ermöglichen, wodurch zusätzlich zu den wirkenden Griffkanten Schnee im geöffneten Feineinschnitt wie in einer Tasche festsetzt und der Schneegriff hierdurch verbessert werden kann. Daneben ist bekannt, bei Winterreifen Feineinschnitte wellenförmig mit kleiner Wellenlänge und in Bezug auf die Wellenlänge vergleichsweise großer Amplitude auszubilden, um auf diese Weise die gesamtwirkende Griffkantenlänge zur verbesserten Griffwirkung auf Schnee in Umfangs- und in axialer Richtung A möglichst groß auszubilden. Dabei werden zum Teil die unmittelbaren Anbindungen derartiger wellenförmiger Feineinschnitte an die Umfangsrille mit einem geradlinigen Verlauf ausgebildet. Die Feineinschnitte sind dabei üblicherweise in ihrem Gesamterstreckungsverlauf mehr oder weniger geradlinig und parallel zur Randkontur des Reifenlatsches ausgebildet. Derartige Feineinschnitte mit kurzer Wellenlänge schlagen beim Eintritt in den Reifenlatsch nahezu wie geradlinige Feineinschnitte parallel zur Footprintgrenze auf unter erhöhter Geräuschentstehung.

Bei Sommerreifen sind gutes Bremsen und Handling auf trockener Straße sowie gutes Bremsen und Handling auf nasser Straße sowie gute Abriebeigenschaften und geringer Rollwiderstand im Vordergrund wichtige Auslegungskriterien des Reifens. Geradlinige im Wesentlichen in axialer Richtung verlaufende Feineinschnitte bewirken bei tiefer oder dichter Ausbildung der Feineinschnitte eine verstärkte Aufweichung des Profiles, wodurch die Trockeneigenschaften, Handling und Abrieb negativ beeinflusst werden können. Beim Durchlaufen des Reifenlatsches kann bei tiefen Feineinschnitten darüber hinaus eine erhöhte Kompression zur Erhöhung des Rollwiderstandes führen. Bei Ausbildung der Feineinschnitte mit nur geringer Tiefe wird das Profil zwar versteift, wodurch die Trockeneigenschaften begünstigt werden. Allerdings kann bereits nach kurzer Zeit die Nassgriffeigenschaft negativ beeinträchtigt werden. Die hohen Versteifung kann sich ebenfalls auf den Rollwiderstand auswirken. Die Ausbildung mit wellenförmigen Feineinschnitten kurzer Wellenlänge, bei der die Feineinschnitte im Profilelement mit Wellenformen mit großer Amplitude und kurzer Wellenlänge ausgebildet sind, kann zur Kompression beim Durchlauf des Reifenlatsches und somit zur Erhöhung des Rollwiderstandes sowie zu erhöhtem Abrieb der Griffkanten im Bereich der Amplituden führen.

Aus der EP 0 618 092 A1 ist ein Laufstreifenprofil gemäß den Merkmalen des Oberbegriffs des Anspruchs 1 bekannt. Auch aus der WO 01/60641 A1 ist eine Ausbildung eines Laufstreifenprofils gemäß den Merkmalen des Oberbegriffs desAnspruchs 1 bekannt.

Der Erfindung liegt daher die Aufgabe zugrunde, mit einfachen Mitteln einen Reifen mit guten Sommereigenschaften mit einem gutem Rollwiderstand bei guten Nassgriffeigenschaften und bei guten Trockeneigenschafften zu ermöglichen.

Die Aufgabe wird erfindungsgemäß durch die Ausbildung eines Laufstreifenprofils eines Fahrzeugluftreifens mit über den Umfang des Reifens erstreckten Profilbändern - wie zum Beispiel Umfangsrippen oder Profilblockreihen -, welche zwischen zwei Umfangsrillen angeordnet sind, wobei ein Profilband in axialer Richtung A zu einer das Profilband begrenzenden Umfangsrille jeweils von einer Flanke begrenzt ist, welche die zum Profilband weisende Rillenwand der Umfangsrille bildet, und wobei das Profilband in radialer Richtung R nach außen hin von einer die Bodenkontaktoberfläche bildenden radial äußeren Oberfläche begrenzt ist, mit von Umfangsrille zu Umfangsrille erstreckten Feineinschnitten in der radial äußeren Oberfläche zumindest eines Profilbandes, wobei in der radial äußeren Oberfläche zumindest eines Profilbandes Paare von in Umfangsrichtung U hintereinander benachbart angeordneten in axialer Richtung A erstreckten Feineinschnitten ausgebildet sind mit einem in der radial äußeren Oberfläche längs der axialen Erstreckung von der einen Umfangsrille zur anderen Umfangsrille entgegengesetzt zueinander gekrümmtem Verlauf, **gemäß den Merkmalen von Anspruch 1 gelöst, bei dem in der radial äußeren Oberfläche des Profilbandes zwei unterschiedliche Paare von in Umfangsrichtung U hintereinander benachbart angeordneten Feineinschnitten mit einem in der radial äußeren Oberfläche längs der axialen Erstreckung von der einen Umfangsrille zur anderen Umfangsrille entgegengesetzt gekrümmtem Verlauf ausgebildet sind, welche über den Umfang des Reifens verteilt in alternierender Reihenfolge angeordnet sind**

Durch diese Ausbildung wird ermöglicht, dass über den gesamten axialen Erstreckungsbereich des Profilbandes Feineinschnitte ausgebildet sind, die lediglich einen Teil einer Wellenform und somit den Bruchteil einer relativ langwelligen Welle aufweisen. Hierdurch kann sowohl ein gleichmäßiges Öffnen und Schließen zur Herstellung von Griffkanten auf nasser Straße ermöglicht werden und aufgrund der gegenläufig orientierten Krümmung im Paar der benachbarten Feineinschnitte sowohl gleichmäßig verteilte Griffkanten in axialer als auch in Umfangsrichtung wirksam ausgebildet werden. Trotz ausreichender Tiefe der Feineinschnitte zur Sicherstellung verbesserter Griffwirkung auf nasser Oberfläche in Umfangsrichtung und in axialer Richtung zur Erzielung guter Handling- und Nassgriffeigenschaften auf nasser Straße ist durch die Form der Paare von Feineinschnitten eine hohe Umfangs- und Quersteifigkeit des Profilbandes möglich, wodurch gute Trockengriff- und Handlingeigenschaften aufrechterhalten bleiben. Die auftretende Kompression beim Durchlaufen des Latsches kann reduziert und gleichzeitig die Steifigkeit soweit begrenzt werden, dass beim Ein- und beim Auslauf aus dem Reifenlatsch ein flexibles Abrollen und somit eine Reduzierung des Rollwiderstandes ermöglicht wird. Ein Einrollen oder Kippen von aufschlagenden Kanten kann reduziert werden, da die große gebogene Kantenlänge eine erhöhte Stabilität und die langwellige Wellenform ein allmähliches Aufschlagen im Reifenlatsch bewirkt. Die Gefahr des erhöhten Abriebs von im Feineinschnitt erzielten Kanten ist aufgrund der großwelligen Ausbildung reduziert.

**Die** Ausbildung der unterschiedlichen Form und Anordnung der Feineinschnitte ermöglicht besondere Vorteile hinsichtlich der Geräuschentstehung und Steifigkeit. Das Entstehen bestimmter Anregungen durch Aufschlagen einzelner Feineinschnitte kann minimiert werden, wodurch ein homogenes Abrollen begünstigt wird.

Besonders vorteilhaft ist die Ausbildung eines Laufstreifenprofils eines Fahrzeugluftreifens gemäß den Merkmalen von Anspruch 2, wobei der gekrümmte Verlauf beider Feineinschnitte eines Paares jeweils einen Abschnitt einer in axialer Richtung A erstreckten Wellenform mit in Umfangsrichtung U gemessener Amplitude bildet. Hierdurch kann in einfacher Weise ein System mit annähernd gleicher Steifigkeit und homogenen Zwischenraumgrößen der von Feineinschnitten und Rillen begrenzten Gummiabschnitte, wodurch gute Abriebeigenschaften begünstigt werden, ermöglicht werden.

Besonders vorteilhaft ist die Ausbildung eines Laufstreifenprofils eines Fahrzeugluftreifens gemäß den Merkmalen von Anspruch 3, wobei der gekrümmte Verlauf beider Feineinschnitte eines Paares jeweils einen zu einander phasenversetzten Abschnitt einer Wellenform gleicher Wellenlänge bildet. Hierdurch kann in einfacher Weise ein System mit annähernd gleicher Steifigkeit und homogenen Zwischenraumgrößen der von Feineinschnitten und Rillen begrenzten Gummiabschnitte, wodurch gute Abriebeigenschaften begünstigt werden, ermöglicht werden.

Besonders vorteilhaft ist die Ausbildung eines Laufstreifenprofils eines Fahrzeugluftreifens gemäß den Merkmalen von Anspruch **4,** wobei der gekrümmte Verlauf beider Feineinschnitte jeweils einen zu einander phasenversetzten Abschnitt einer Wellenform gleicher in Umfangsrichtung gemessener Amplitude bildet. Hierdurch kann eine sehr dichte Anordnung der Feineinschnitte bei homogenen Zwischenraumgrößen der von Feineinschnitten und Rillen begrenzten Gummiabschnitte, wodurch gute Abriebeigenschaften begünstigt werden, ermöglicht werden.

Besonders vorteilhaft ist die Ausbildung eines Laufstreifenprofils eines Fahrzeugluftreifens gemäß den Merkmalen von Anspruch **5,** wobei die Phase des einen Feineinschnitts gegenüber der des anderen Feineinschnitts um einen Phasenwinkel π versetzt ist. Hierdurch kann eine sehr dichte Anordnung der Feineinschnitte bei homogenen Zwischenraumgrößen der von Feineinschnitten und Rillen begrenzten Gummiabschnitte, wodurch gute Abriebeigenschaften begünstigt werden, ermöglicht werden.

Besonders vorteilhaft ist die Ausbildung eines Laufstreifenprofils eines Fahrzeugluftreifens gemäß den Merkmalen von Anspruch **6,** wobei die Phase des einen Feineinschnitts des ersten Paares gegenüber dem einen Feineinschnitt des zweiten Paares um einen Phasenwinkel (π /2) und die Phase des zweiten Feineinschnitts des ersten Paares gegenüber dem zweiten Feineinschnitt des zweiten Paares um einen Phasenwinkel (π /2) versetzt ausgebildet ist. Hierdurch kann eine sehr dichte Anordnung der Feineinschnitte bei homogenen Zwischenraumgrößen der von Feineinschnitten und Rillen begrenzten Gummiabschnitte, wodurch gute Abriebeigenschaften begünstigt werden, ermöglicht werden.

Besonders vorteilhaft ist die Ausbildung eines Laufstreifenprofils eines Fahrzeugluftreifens gemäß den Merkmalen von Anspruch 7, wobei die beiden Feineinschnitte des zweiten Paares sich in der radial äußeren Oberfläche des Profilbandes - insbesondere in ihrem Wendepunkt - schneiden. Die Ausbildung behindert die Entstehung zu dünner beweglicher Gummiabschnitte zwischen den Feineinschnitten und deren negativen Einfluss auf die Abriebeigenschaften und begünstigt, dass die anregenden Aufschlagkanten zur Geräuschreduktion verschieden sind.

Besonders vorteilhaft ist die Ausbildung eines Laufstreifenprofils eines Fahrzeugluftreifens gemäß den Merkmalen von Anspruch **8,** wobei die beiden Feineinschnitte des ersten Paares sich in der radial äußeren Oberfläche des Profilbandes nicht schneiden.

Besonders vorteilhaft ist die Ausbildung eines Laufstreifenprofils eines Fahrzeugluftreifens gemäß den Merkmalen von Anspruch **9,** wobei die beiden Feineinschnitte eines Paares in Verlängerung ihres wellenförmigen Verlaufes in axialer Richtung A des Reifens über eine das Profilband begrenzende Umfangsrille hinweg ein entsprechendes Paar von Feineinschnitten in der radial äußeren Oberfläche eines weiteren durch die Umfangsrille begrenzten Profilbandes bildet. Hierdurch können die Vorteile in einfacher Weise über weite Profilbereiche hinweg gleichmäßig umgesetzt werden, was gerade bei breiten Profilen besonders wünschenswert ist. Außerdem ist durch die Wiederholung der Struktur eine Art Frequenzauslöschung (noise cancelation) möglich.

Besonders vorteilhaft ist die Ausbildung eines Laufstreifenprofils eines Fahrzeugluftreifens gemäß den Merkmalen von Anspruch **10,** wobei in der radial äußeren Oberfläche des Profilbandes ein weiteres Paar von wellenförmig in Umfangsrichtung U ausgerichteten Feineinschnitten mit gleicher Wellenlänge und mit längs der Erstreckung in Umfangsrichtung U versetzter Phase ausgebildet ist, welches sich insbesondere über den gesamten Umfang des Reifens erstreckt, und wobei der axiale Abstand der beiden in Umfangsrichtung U ausgerichteten Nulldurchgangslinien der beiden Wellenformen kleiner ist als die Amplitude, so dass sich die Feineinschnitte über den Umfang des Reifens schneiden. Dies ermöglicht ein Netz mit möglichst dichten Feineinschnitt möglichst großer Wellenlängen auf engstem Raum.

Besonders vorteilhaft ist die Ausbildung eines Laufstreifenprofils eines Fahrzeugluftreifens gemäß den Merkmalen von Anspruch **11**, wobei die Schnittpunkte der Feineinschnitte des weiteren Paars von wellenförmig in Umfangsrichtung U ausgerichteten Feineinschnitten zwischen den beiden Feineinschnitten eines ersten Paares von in axialer Richtung A erstreckten Feineinschnitten ausgebildet ist. Hierdurch sind die Schnittpunkte bei sehr dichter Anordnung der Feineinschnitte bei homogenen Zwischenraumgrößen der von Feineinschnitten und Rillen begrenzten Gummiabschnitte, wodurch gute Abriebeigenschaften begünstigt werden, angeordnet.

Besonders vorteilhaft ist die Ausbildung eines Laufstreifenprofils eines Fahrzeugluftreifens gemäß den Merkmalen von Anspruch **12,** wobei die Paare der in axialer Richtung A verlaufenden Feineinschnitte jeweils in ihrem Tiefenverlauf derart ausgebildet sind, dass auf der zur einen Umfangsrille hin gelegenen Seite der in eine Orientierungsrichtung in Umfangsrichtung gesehene erste der zwischen der Umfangsrille und dem nächstliegenden Schnittpunkt mit einem wellenförmigen in Umfangsrichtung ausgerichteten Feineinschnitt angeordnete Erstreckungsabschnitt der beiden Feineinschnitte und auf der zur anderen Umfangsrille hin gelegenen Seite der in die gleiche Orientierungsrichtung in Umfangsrichtung gesehene zweite zwischen der Umfangsrille und dem nächstliegenden Schnittpunkt mit einem wellenförmigen in Umfangsrichtung ausgerichteten Feineinschnitt angeordnete Erstreckungsabschnitt der beiden Feineinschnitte zumindest einem Erstreckungsabschnitt größerer radialer Erstreckungstiefe als im Rest der Erstreckung der beiden Feineinschnitte ausgebildet ist. Die gleichmäßige Verteilung der tiefen Einschnittabschnitte bewirken eine gelichmäßige Steifigkeit, wodurch der Abrieb weiter verbessert werden kann.

Die Erfindung wird im Folgenden an Hand der in den Figuren 1 bis 7 dargestellten Ausführungsbeispiele näher erläutert. Hierin zeigen
- Fig.1: eine Draufsicht auf einen Abschnitt eines Laufstreifenprofiles eines PKW-Fahrzeugluftreifens mit Umfangsrippen,
- Fig.2: Draufsicht auf einen vergrößerten Abschnitt des Laufstreifenprofils von Fig.1,
- Fig.3: das Laufstreifenprofil von Fig.1 in Schnittdarstellung gemäß Schnitt III-III von Fig.1,
- Fig.4: das Laufstreifenprofil von Fig. 1 in Schnittdarstellung gemäß Schnitt IV-IV von Fig.1,
- Fig.5: das Laufstreifenprofil von Fig.1 1 in Schnittdarstellung gemäß Schnitt V-V von Fig.1,
- Fig.6: das Laufstreifenprofil von Fig.1 in Schnittdarstellung gemäß Schnitt VI-VI von Fig.1,
- Fig.7: das Laufstreifenprofil von Fig.1 in Schnittdarstellung gemäß Schnitt VII-VII von Fig.1.

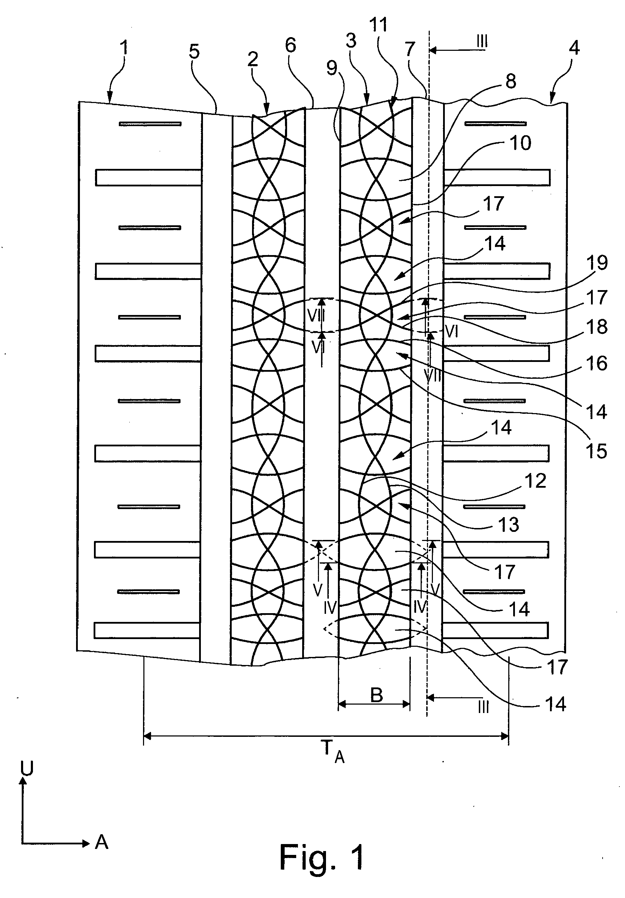

Die Fig. 1 zeigt ein Laufstreifenprofil eines Fahrzeugluftreifens für Personenkraftwagen (PKW), bei dem in axialer Richtung A des Fahrzeugluftreifens eine über den Umfang des Fahrzeugluftreifens erstreckte Schulterprofilblockreihe 1, eine Umfangsrippe 2, eine Umfangsrippe 3 und eine über den Umfang des Fahrzeugluftreifens erstreckte Schulterprofilblockreihe 4 nebeneinander angeordnet sind. Die Schulterprofilblockreihen 1 und 4 sowie die Umfangsrippen 2 und 3 erstrecken sich über den gesamten Umfang des Fahrzeugluftreifens und sind in Umfangsrichtung U ausgerichtet. Die Schulterprofilblockreihe 1 und die Umfangsrippe 2 sind in bekannter Weise in axialer Richtung A durch eine über den gesamten Umfang des Fahrzeugluftreifens erstreckte und in Umfangsrichtung U ausgerichtete Umfangsrille 5 voneinander beabstandet. Die Umfangsrippe 2 und die Umfangsrippe 3 sind in axialer Richtung A durch eine über den gesamten Umfang des Fahrzeugluftreifens erstreckte und in Umfangsrichtung U ausgerichtete Umfangsrille 6 voneinander beabstandet. Die Umfangsrippe 3 und die Schulterprofilblockreihe 4 sind in bekannter Weise in axialer Richtung A durch eine über den gesamten Umfang des Fahrzeugluftreifens erstreckte und in Umfangsrichtung U ausgerichtete Umfangsrille 7 voneinander beabstandet. Die Bodenaufstandsfläche des Fahrzeugluftreifens ist mit einer Bodenaufstandsbreite T_{A} ausgebildet, welche sich in axialer Richtung A aus dem axialen Erstreckungsbereich der Schulterprofilblockreihe 1 bis in den axialen Erstreckungsbereich der Schulterprofilblockreihe 4 erstreckt. Die Bodenaufstandsbreite T_{A} wird dabei am montierten Fahrzeugluftreifen im Betriebszustand bei Normdruck bemessen.

Die Umfangsrillen 5, 6 und 7 sind in radialer Richtung R des Fahrzeugluftreifens nach innen hin jeweils von einem Rillengrund 23 begrenzt, welcher über den gesamten Umfang des Fahrzeugluftreifens erstreckt ausgebildet ist. Die Umfangsrippen 2 und 3 sind in radialer Richtung R nach außen hin von einer die Bodenkontaktoberfläche bildenden Oberfläche 8 begrenzt, welche sich jeweils über den gesamten Umfang des Fahrzeugluftreifens in Umfangsrichtung U und bei der Umfangsrippe 3 in axialer Richtung A von der Umfangsrille 6 bis zur Umfangsrille 7 hin und bei der Umfangsrippe 2 in axialer Richtung A von der Umfangsrille 5 bis zur Umfangsrille 6 hin erstreckt. Die Umfangsrille 5 ist in axialer Richtung A zur Umfangsrippe 2 hin durch eine Rillenwand begrenzt, welche die zur Umfangsrille 5 hin gerichtete Flanke der Umfangsrippe 2 bildet, und zur Schulterprofilblockreihe 1 hin durch eine Rillenwand, welche die zur Umfangsrille 5 hin gerichtete Flanke der Schulterprofilblockreihe 1 bildet. Die Umfangsrille 6 ist in axialer Richtung A zur Umfangsrippe 2 hin durch eine Rillenwand begrenzt, welche die zur Umfangsrille 6 hin gerichtete Flanke der Umfangsrippe 2 bildet, und zur Umfangsrippe 3 hin durch eine Rillenwand, welche die zur Umfangsrille 6 hin gerichtete Flanke 9 der Umfangsrippe 3 bildet. Die Umfangsrille 7 ist zur Umfangsrippe 3 hin durch eine Rillenwand begrenzt, welche die zur Umfangsrille 7 hin gerichtete Flanke 10 der Umfangsrippe 3 bildet, und zur Schulterprofilblockreihe 4 hin durch eine Rillenwand, welche die zur Umfangsrille 7 hingerichtete Flanke der Schulterprofilblockreihe 4 bildet. Die Flanke 9 der Umfangsrippe 3 erstreckt sich in radialer Richtung R aus dem Rillengrund 23 der Umfangsrille 6 bis zur radial äußeren Oberfläche 8 der Umfangsrippe 3. Ebenso erstreckt sich die Flanke 10 der Umfangsrippe 3 aus dem Rillengrund 23 der Umfangsrille 7 in radialer Richtung R bis zur radialen äußeren Oberfläche 8 der Umfangsrippe 3. Entsprechend erstrecken sich die beiden die Umfangsrippe 2 begrenzenden Flanken-jeweils aus dem Rillengrund 23 der jeweils zugeordneten Umfangsrille 5 bzw. 6 in radialer Richtung R bis zu der die Umfangsrippe 2 nach radial außen hin begrenzenden Oberfläche 8.

Die Umfangsrippe 3 und die Umfangsippe 2 ist jeweils in axialer Richtung A mit einer Breite B ausgebildet, welche in der radial äußeren Oberfläche 8 bemessen wird.

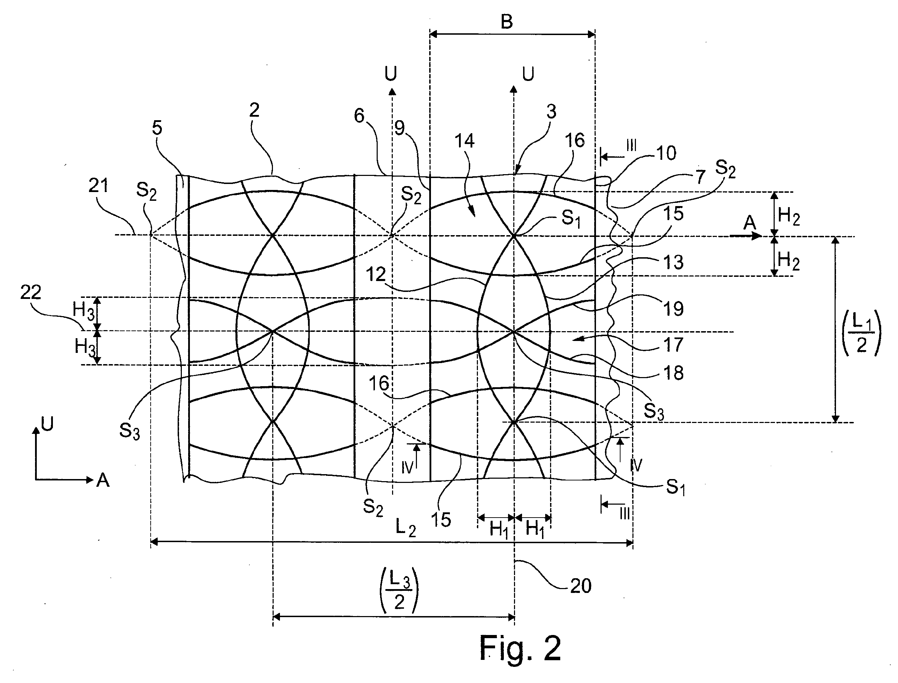

In der Umfangsrippe 3 ist - wie in den Figuren 1 und 2 darstellt ist - ein Paar 11 von in Umfangsrichtung U ausgerichteten und über den Umfang des Reifens erstreckten wellenförmigen Feineinschnitten 12 und 13 ausgebildet. Die wellenförmigen Feineinschnitte 12 und 13 sind um eine gemeinsame in Umfangsrichtung U ausgerichtete Nulldurchgangslinie 10 wellenförmig ausgebildet. Die Wellenform des Feineinschnitts 10 und die Wellenform des Feineinschnitts 11 sind jeweils dabei mit gleicher Wellenlänge L₁ jedoch um einen Phasenwinkel π in Umfangsrichtung U versetzt zueinander ausgebildet. Die Wellenform der beiden Feineinschnitte 12 und 13 ist mit gleicher von der Nulldurchgangslinie 10 gemessener Amplitudenhöhe H1 ausgebildet. Die beiden Wellenlinien der Feineinschnitte 12 und 13 sind an der Nulldurchgangslinie 10 ineinander gespiegelt ausgebildet. Die beiden Wellenlinien der Feineinschnitte 12 und 13 schneiden sich dabei jeweils in im Abstand (L₁/2) in Umfangsrichtung U voneinander angeordneten Schnittpunkten S₁.

Bei Ausbildung eines Reifens in bekannter Weise mit einer Pitchfolgenausbildung des Profils ist der Pitchfolgenverteilung entsprechend die Wellenlänge L₁ über den Umfang des Fahrzeugluftreifens hinweg alternierend ausgebildet. Zwischen zwei in Umfangsrichtung U hintereinander angeordnet ausgebildeten Schnittpunkten S₁ ist jedoch auch dann die Wellenlänge beider Feineinschnitte 12 und 13 jeweils gleich groß.

Die Feineinschnitte 12 und 13 sind dabei längs ihrer Erstreckung in Umfangsrichtung U mit einer gemessen von der radial äußeren Oberfläche 8 der Umfangsrippe 3 in radialer Richtung R nach innen gemessenen Tiefe t₂ ausgebildet.

Wie in Fig. 2 zu erkennen ist, ist ebenso in der Umfangsrippe 2 in analoger Weise ein Paar 11 von in Umfangsrichtung U ausgerichteten wellenförmigen Feineinschnitten 12 und 13 ausgebildet, wobei jeweils ein Schnittpunkt S₁ der Feineinschnitten 12 und 13 in der Umfangsrippe 2 in einer Umfangsposition des Reifens ausgebildet ist, in der auch ein Schnittpunkt S₁ in der Umfangsrippe 3 ausgebildet ist. Ebenso ist jeweils ein Schnittpunkt S₁ der Feineinschnitten 12 und 13 in der Umfangsrippe 3 in einer Umfangsposition des Reifens ausgebildet ist, in der auch ein Schnittpunkt S₁ in der Umfangsrippe 2 ausgebildet ist.

Wie den Figuren 1 und 2 zu entnehmen ist, sind über den Umfang des Fahrzeugluftreifens in Umfangsrichtung U verteilt in den Umfangsrippen 2 und 3 jeweils in alternierender Reihenfolge ein Paar 14 von in axialer Richtung A ausgerichteten wellenförmigen Feineinschnitten 15 und 16 und ein Paar 17 von in axialer Richtung A ausgerichteten wellenförmigen Feineinschnitten 18 und 19 ausgebildet.

Das Paar 14 von wellenförmigen Feineinschnitten 15 und 16 ist dabei derart ausgebildet, dass sich die Feineinschnitte 15 und 16 jeweils um eine in axialer Richtung A ausgerichtete Nulldurchgangslinie 21 wellenförmig erstrecken, wobei die Wellenform der Feineinschnitte 15 und 16 eine Wellenlänge L₂ aufweist mit (L₂)/2 > B. Die Wellenform der Feineinschnitte 15 und 16 ist dabei in axialer Richtung A des Fahrzeugluftreifens um einen Phasenwinkel π versetzt zueinander ausgebildet, so dass sich die beiden Feineinschnitte 15 und 16 jeweils in auf der Nulldurchgangslinie 21 im Abstand (L₂/2) voneinander ausgebildeten Schnittpunkten S₂ schneiden. Die Wellenform der Feineinschnitte 15 und 16 ist dabei jeweils mit gleicher von der Nulldurchgangslinie 21 in Umfangsrichtung U gemessenen Amplitude H₂ ausgebildet. Der Feineinschnitt 15 weist in seiner Wellenform jeweils ein Maximum in gleicher axialer Position auf, in der der Feineinschnitt 16 ein Minimum aufweist. Der Feineinschnitt 15 weist in seiner Wellenform jeweils in gleicher axialer Position ein Minimum auf, in der die Wellenform des Feineinschnitts 16 ein Maximum aufweist. Die Schnittpunkte S₂ sind dabei außerhalb der Umfangsrippen 2 und 3 ausgebildet, wobei ein Schnittpunkt S₂ der Wellenformen der Feineinschnitte 15 und 16 im Erstreckungsbereich der Umfangsrille 6, ein Schnittpunkt S₂ im Erstreckungsbereich der Umfangsrille 5 und ein Schnittpunkt S₂ im Erstreckungsbereich der Umfangsrille 7 ausgebildet ist. Diese Schnittpunkte S₂ sind dabei in der axialen Verlängerung der radial äußeren Oberfläche 8 in diese jeweilige Umfangsrille 5, 6 bzw. 7 hinein ausgebildet.

Die Schnittpunkte S₁ des Paars 11 der in Umfangsrichtung U ausgerichteten wellenförmigen Feineinschnitte 12 und 13 sind dabei jeweils in der axialen Position der Maxima bzw. Minima der Wellenform der Feineinschnitte 15 und 16 des Paars von Feineinschnitten 14 zwischen den beiden Feineinschnitten 15 und 16 eines Paares 14 ausgebildet.

Zwischen zwei in Umfangsrichtung U hintereinander angeordneten Paaren 14 von Feineinschnitten 15 und 16 ist jeweils ein Paar 17 von Feineinschnitten 18 und 19 ausgebildet, welche ebenfalls in axialer Richtung A des Fahrzeugluftreifens ausgerichtet und wellenförmig um eine in axialer Richtung A ausgerichtete gemeinsame Nulldurchgangslinie 22 verlaufend ausgebildet sind. Die beiden Feineinschnitte 18 und 19 eines Paares 17 von Feineinschnitten sind dabei jeweils mit gleicher in axialer Richtung A gemessener Wellenlänge L₃ und mit jeweils gleicher von der Nulldurchgangslinie 22 in Umfangsrichtung U gemessenen Amplitude H₃ ausgebildet. Die Feineinschnitte 18 und 19 sind dabei mit ihrer Wellenform derart ausgebildet, dass sie in axialer Richtung A um einen Phasenwinkel π versetzt zueinander ausgebildet sind und sich jeweils entlang der axialen Erstreckung der Nulldurchgangslinie 22 in auf der Nulldurchgangslinie 22 ausgebildeten Schnittpunkten S₃ schneiden. Dabei ist jeweils genau ein Schnittpunkt S₃ eines Paares 17 von Feineinschnitten 18 und 19 in der radial äußeren Oberfläche 8 der Umfangsrippe 2 und genau ein Schnittpunkt S₃ eines Paares 17 von Feineinschnitten 18 und 19 in der radial äußeren Oberfläche 8 der Umfangsrippe 3 ausgebildet. Die Schnittpunkte S₃ der Paare 17 von Feineinschnitten 18 und 19 in der Umfangsrippe 3 liegen dabei in gleicher axialer Position wie die Schnittpunkte S₁ des Paares 11 von in Umfangsrichtung U ausgerichteten Feineinschnitten 12 und 13. Ebenso liegen die Schnittpunkte S₃ der Umfangsrippe 2 in gleicher axialer Position wie die Schnittpunkte S₁ des Paares 11 von in Umfangsrichtung U ausgerichteten Feineinschnitten 12 und 13 der Umfangsrippe 2. Die Wellenformen der Feineinschnitte 18 und 19 nehmen ihre Maxima bzw. Minima jeweils in axialen Positionen außerhalb der Umfangsrippe 2 und 3 ein. Der Feineinschnitt 18 und der Feineinschnitt 19 weist sowohl in der Umfangsrille 6 als auch in der Umfangsrille 5 als auch in der Umfangsrille 7 jeweils einen Extremwert seiner Wellenform auf, welcher in gleicher axialer Position ausgebildet wie die Schnittpunkte S₂ der Wellenform der Feineinschnitte 15 und 16.

Die Wellenlängen L₂ und die Wellenlänge L₃ ist mit L₂ = L₃ gewählt. Die Phase der Wellenform des Feineinschnitts 15 des Paares 14 ist in axialer Richtung A gegenüber der Phase der Wellenform des Feineinschnittes 18 des Phasenpaares 17 um einen Phasenwinkel (π/2) verschoben. Die Phase der Wellenform des Feineinschnittes 16 des Paares 14 ist in axialer Richtung A gegenüber der Wellenform des Feineinschnitt 19 des Paares 17 um einen Phasenwinkel (π/2) verschoben.

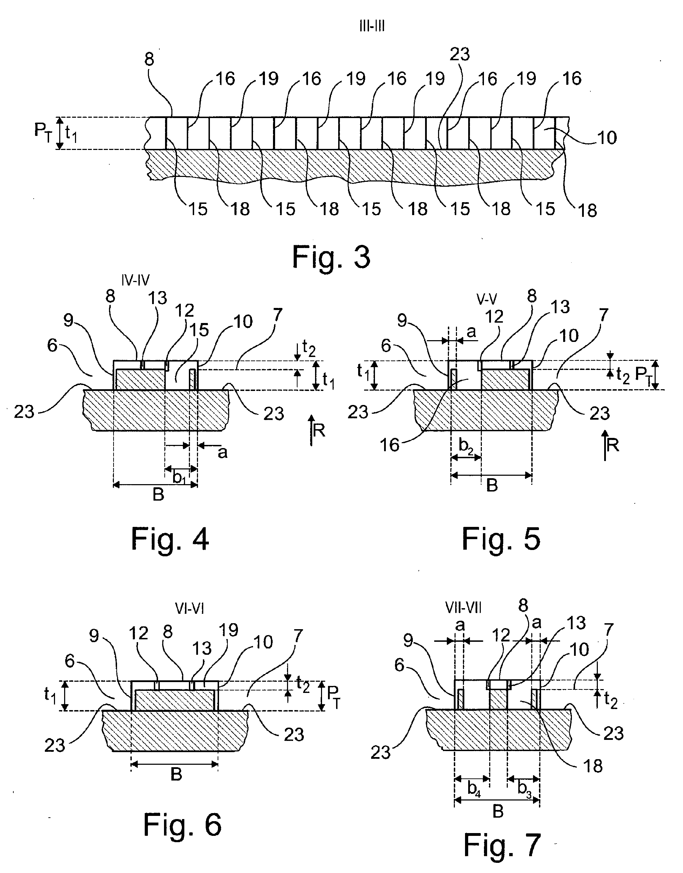

Wie den Figuren 1, 2 und 4 entnommen werden kann, ist der Feineinschnitt 15 in seinem Erstreckungsbereich von der Umfangsrille 6 über die Schnittposition mit dem Feineinschnitt 13 hinweg bis zur Schnittposition mit dem Feineinschnitt 12 mit einer von der radial äußeren Oberfläche 8 gemessenen Tiefe t₂ ausgebildet. In dem axialen Erstreckungsbereich ausgehend von der Schnittposition mit dem Feineinschnitt 12 über die gesamte axiale Erstreckung b₁ bis zur Umfangsrille 7 ist der Feineinschnitt 15 in einer ersten Ausführungsform durchgehend mit einer ausgehend von der radial äußeren Oberfläche 8 nach radial innen hin gemessenen Tiefe t₁ ausgebildet. Der in Umfangsrichtung U dem Feineinschnitt 15 nachgeordnete Feineinschnitt 16 - wie in den Figuren 1, 2 und 5 dargestellt ist - ist ausgehend von der Umfangsrille 7 in seinem Erstreckungsbereich über die Schnittposition mit dem Feineinschnitt 13 hinweg bis zur Schnittposition mit dem Feineinschnitt 12 mit einer von der radial äußeren Oberfläche 8 nach radial innen hin gemessenen Tiefe t₂ ausgebildet. Der Feineinschnitt 16 ist ausgehend von der Schnittposition mit dem Feineinschnitt 12 über seinen gesamten axialen Erstreckungsbereich b₂ bis zur Umfangsrille 6 hin in einer ersten Ausführungsform mit einer von der radial äußeren Oberfläche 8 nach radial innen hin gemessenen Tiefe t₁ ausgebildet. Wie in Fig. 6 dargestellt ist, ist der Feineinschnitt 19 über seinen gesamten axialen Erstreckungsbereich ausgehend von der Umfangsrille 7 bis zur Umfangsrille 6 hin mit einer von der radial äußeren Oberfläche 8 nach radial hin gemessenen Tiefe t₂ ausgebildet. Wie in den Figuren 1, 2 und 7 dargestellt ist, ist der Feineinschnitt 18 in einer ersten Ausführungsform längs seiner axialen Erstreckung ausgehend von der Umfangsrille 7 über seine gesamten axiale Erstreckungsbereich b₃ bis zur Schnittstelle mit dem Feineinschnitt 13 mit einer von der radial äußeren Oberfläche 8 in radialer Richtung R nach innen gemessenen Tiefe t₁ und von der Schnittstelle mit dem Feineinschnitt 13 bis hin zur Schnittstelle mit dem Feineinschnitt 12 mit einer Tiefe t₂ und von der Schnittstelle mit dem Feineinschnitt 12 über seinen gesamten axialen Erstreckungsbereich b₄ bis zur Umfangsrille 6 hin wiederum mit einer Tiefe t₁ ausgebildet. Die Tiefe t₁ ist dabei mit P_{T} ≥ t₁> t₂ ausgebildet, wobei P_{T} jeweils die Profiltiefe darstellt, welche ausgehend von der radial äußeren Oberfläche 8 in radialer Richtung R nach innen bis zum tiefsten Punkt des Rillengrund 23 der angrenzenden Umfangsrillen 6 und 7 bemessen wird.

Die axiale Erstreckung b₁, b₂, b₃ und b₄ ist dabei jeweils mit b₁ ≥ (0,25 B), b₂ ≥ (0,25 B), b₃ ≥ (0,25 B) und b₄ ≥ (0,25 B) ausgebildet.

Im dargestellten Ausführungsbeispiel ist die Tiefe t₁ mit t₁ = P_{T} ausgebildet. Beispielsweise ist t₁ = P_{T} = 7mm ausgebildet. Die Tiefe t₂ ist mit (0,1 P_{T}) ≤ t₂ ≤ (0,4 P_{T}) ausgebildet. Die Tiefe t₂ ist mit lamm ≤ t₂ ≤ 3mm - beispielsweise mit t₂ = 1,5 mm - ausgebildet.

Auf diese Weise ist jeweils in der Umfangsrippe 3 bzw. in der Umfangsrippe 2 sowohl in dem axialen Erstreckungsabschnitt zwischen Umfangsrille 7 und dem Paar 11 von in Umfangsrichtung ausgerichteten Feineinschnitten 12 und 13 jeweils über den Umfang des Fahrzeugluftreifens hinweg in alternierender Reihenfolge ein axialer Erstreckungsabschnitt eines gekrümmten Feineinschnittes mit der Tiefe t₂ und der in Umfangsrichtung U nachfolgend angeordnete axiale Erstreckungsabschnitt eines gekrümmten Feineinschnittes mit der Tiefe t₁ ausgebildet. Ebenso ist in dem axialen Erstreckungsabschnitt zwischen der Umfangsrille 6 und dem Paar 11 von in Umfangsrichtung erstreckten Feineinschnitten 12 und 13 jeweils über den Umfang des Fahrzeugluftreifens hinweg in alternierender Reihenfolge ein axialer Erstreckungsabschnitt eines gekrümmten Feineinschnitt mit der Tiefe t₁ und der in Umfangsrichtung nachfolgend angeordnete axiale Erstreckungsabschnitt eines gekrümmten Feineinschnittes mit der Tiefe t₂ ausgebildet. Dabei ist in der Umfangsrippe 3 jeweils in der Umfangsposition, in der ein auf der rechten zur Umfangsrille 7 hin ausgebildeter Erstreckungsabschnitt eines Feineinschnitts mit der Tiefe t₂ ausgebildet ist, der links zur Umfangsrille 6 hin ausgebildete Erstreckungsabschnitt mit der Tiefe t₁ ausgebildet und umgekehrt. Somit ergibt sich über den Umfang des Fahrzeugluftreifens hinweg, dass die Umfangsrippe 3 mit ihren Feineinschnitten 12,13,15,16,18 und 19 im Wesentlichen mit den Feineinschnitttiefen t₂ ausgebildet ist, jedoch in den äußeren zu den Umfangsrillen 6 und 7 hin erstreckten axialen Erstreckungsbereichen der in axialer Richtung A ausgerichteten Feineinschnitte 15,16,18 und 19 jeweils mit einem mit in Umfangsrichtung U in alternierender Reihenfolge mit wechselnder Tiefe t₁ und t₂ ausgebildeten Erstreckungsabschnitten von Feineinschnitten. Die Positionen der axialen Erstreckungsbereiche von Feineinschnitten, die mit der Tiefe t₁ ausgebildet sind, sind auf der rechten zur Umfangsrille 7 hin ausgebildeten Seite jeweils in Umfangsrichtung U zu den entsprechenden Positionen der axialen Erstreckungsbereiche von Feineinschnitten, die mit der Tiefe t₁ ausgebildet sind, auf der linken zur Umfangsrille 6 hin ausgebildeten Seite versetzt angeordnet. Die Positionen der axialen Erstreckungsbereiche von Feineinschnitten, die mit der Tiefe t₂ ausgebildet sind, sind auf der rechten zur Umfangsrille 7 hin ausgebildeten Seite jeweils in Umfangsrichtung U zu den entsprechenden Positionen der axialen Erstreckungsbereiche von Feineinschnitten, die mit der Tiefe t₂ ausgebildet sind, auf der linken zur Umfangsrille 6 hin ausgebildeten Seite versetzt angeordnet.

Die Figuren 4 bis 7 zeigen noch ein weiteres Ausführungsbeispiel, bei dem jeweils in den Feineinschnitten 15, 16 und 18 im Erstreckungsbereich b₁, b₂, b₃ und b₄ die die Tiefe t₁ in Richtung zur nächstliegenden Umfangsrille 6 bzw.7 lediglich bis in einen axialen Abstand a von der angrenzenden Umfangsrille 6 bzw. 7 ausgebildet ist. In dem schmalen Erstreckungsbereich a ist der jeweilige Feineinschnitt 15,16 bzw. 18 jeweils lediglich mit der Tiefe t₂ ausgebildet. Die im Erstreckungsbereich a hierdurch erfolgte Anhebung des Feineinschnittsgrundes bindet das Material der Umfangsrippe 3 unmittelbar neben der benachbarten Umfangsrille 6 bzw. 7 durch den Feineinschnitt hinweg an. Die jeweilige Breite a der Anbindung ist dabei im Erstreckungsabschnitt der Breite b₁ mit b₁ ≥ 2a, im Erstreckungsabschnitt der Breite b₂ mit b₂ ≥ 2a, im Erstreckungsabschnitt der Breite b₃ mit b₃ ≥ 2a und im Erstreckungsabschnitt der Breite b₄ mit b₄ ≥ 2a bemessen. Beispielsweise ist a in allen axialen Erstreckungsabschnitten gleich groß gewählt und b₁ = b₂ > b₃ = b₄ = 3a.

In einem Ausführungsbeispiel ist beispielsweise a = 2mm ausgebildet.

In einem nicht dargestellten Ausführungsbeispiel ist der Rillengrund 23 der Umfangsrillen 5, 6 und 7 um ein Maß t₃ gegenüber dem der Profiltiefe P_{T} angehoben. In diesem Ausführungsbeispiel sind die Feineinschnitte 15, 16, 18 und 19 jeweils im Rillengrund 23 noch mit einer gegenüber dem Rillengrund 23 nach radial innen erstreckt ausgebildeten radialen Tiefe t₃ bis zur Erreichung des teifesten Punktes der Profiltiefe P_{T} fortgeführt.

Dabei ist die Tiefe t₃ mit t₃ ≤ 0,1 P_{T} ausgebildet. Beispielsweise ist t₃ = 0,5 mm ausgebildet.

### Bezugszeichenliste

### (Teil der Beschreibung)

- 1: Schulterblockreihe
- 2: Umfangsrippe
- 3: Umfangsrippe
- 4: Schulterprofilblockreihe
- 5: Umfangsrille
- 6: Umfangsrille
- 7: Umfangsrille
- 8: Radial äußere Oberfläche
- 9: Flanke
- 10: Flanke
- 11: Paar von umfangsorientierten Feineinschnitten
- 12: Feineinschnitt
- 13: Feineinschnitt
- 14: Paar von axial orientierten Feineinschnitten
- 15: Feineinschnitt
- 16: Feineinschnitt
- 17: Paar von axial orientierten Feineinschnitten
- 18: Feineinschnitt
- 19: Feineinschnitt
- 20: Nulldurchgangslinie
- 21: Nulldurchgangslinie
- 22: Nulldurchgangslinie
- 23: Rillengrund

## Patentansprüche

1. Laufstreifenprofil eines Fahrzeugluftreifens mit über den Umfang des Reifens erstreckten Profilbändern (2,3) - wie zum Beispiel Umfangsrippen oder Profilblockreihen -, welche zwischen zwei Umfangsrillen (5,6,7) angeordnet sind, wobei **ein Profilband** (3) in axialer Richtung A zu einer das Profilband (3) begrenzenden Umfangsrille (6,7) jeweils von einer Flanke (9,10) begrenzt ist, welche die zum Profilband (3) weisende Rillenwand der Umfangsrille(6,7) bildet, und wobei **das Profilband** (3) in radialer Richtung R nach außen hin von einer die Bodenkontaktoberfläche bildenden radial äußeren Oberfläche (8) begrenzt ist, mit von Umfangsrille (6) zu Umfangsrille (7) erstreckten Feineinschnitten (15,16,18,19) in der radial äußeren Oberfläche (8) zumindest des Profilbandes (3), **wobei in der radial äußeren Oberfläche (8) zumindest des Profilbandes (3) Paare (14) von in Umfangsrichtung U hintereinander benachbart angeordneten in axialer Richtung A erstreckten Feineinschnitten (15,16) ausgebildet sind mit einem in der radial äußeren Oberfläche (8) längs der axialen Erstreckung von der einen Umfangsrille (6) zur anderen Umfangsrille (7) entgegengesetzt zueinander gekrümmtem Verlauf,**
**dadurch gekennzeichnet,**
**dass in der radial äußeren Oberfläche (8) des Profilbandes (3) zwei unterschiedliche Paare (14,17) von in Umfangsrichtung U hintereinander benachbart angeordneten Feineinschnitten (15,16,18,19) mit einem in der radial äußeren Oberfläche (8) längs der axialen Erstreckung von der einen Umfangsrille (6) zur anderen Umfangsrille (7) entgegengesetzt gekrümmtem Verlauf ausgebildet sind, welche über den Umfang des Reifens verteilt in alternierender Reihenfolge angeordnet sind.**

2. Laufstreifenprofil gemäß den Merkmalen von Anspruch 1,
wobei der gekrümmte Verlauf beider Feineinschnitte (15,16,18,19) eines Paares (14,17) jeweils einen Abschnitt einer in axialer Richtung A erstreckten Wellenform mit in Umfangsrichtung U gemessener Amplitude bildet.

3. Laufstreifenprofil gemäß den Merkmalen von Anspruch **2,**
wobei der gekrümmte Verlauf beider Feineinschnitte (15,16,18,19) eines Paares (14,17) jeweils einen zu einander phasenversetzten Abschnitt einer Wellenform gleicher Wellenlänge (L₂,L₃) bildet.

4. Laufstreifenprofil gemäß den Merkmalen von Anspruch **2 oder 3,**
wobei der gekrümmte Verlauf beider Feineinschnitte jeweils einen zu einander phasenversetzten Abschnitt einer Wellenform gleicher in Umfangsrichtung gemessener Amplitude bildet.

5. Laufstreifenprofil gemäß den Merkmalen von einem oder mehreren der Ansprüche **2, 3 oder 4,**
wobei die Phase des einen Feineinschnitts (15,18) gegenüber der des anderen Feineinschnitts (16,19) um einen Phasenwinkel π versetzt ist.

6. Laufstreifenprofil gemäß den Merkmalen von Anspruch **1,2 und 5,**
wobei die Phase des einen Feineinschnitts (15) des ersten Paares (14) gegenüber dem einen Feineinschnitt (18) des zweiten Paares (17) um einen Phasenwinkel (π/2) und die Phase des zweiten Feineinschnitts (16) des ersten Paares (14) gegenüber dem zweiten Feineinschnitt (19) des zweiten Paares (17) um einen Phasenwinkel (π/2) versetzt ausgebildet ist.

7. Laufstreifenprofil gemäß den Merkmalen von Anspruch **6,**
wobei die beiden Feineinschnitte (18,19) des zweiten Paares (17) sich in der radial äußeren Oberfläche (8) des Profilbandes (7) - insbesondere in ihrem Wendepunkt - schneiden.

8. Laufstreifenprofil gemäß den Merkmalen von Anspruch **6,**
wobei die beiden Feineinschnitte (15,16) des ersten Paares (14) sich in der radial äußeren Oberfläche (8) des Profilbandes (3) nicht schneiden.

9. Laufstreifenprofil gemäß den Merkmalen von einem oder mehreren der vorangegangenen Ansprüche **2 bis 8,**
wobei die beiden Feineinschnitte (15,16) eines Paares (14) in Verlängerung ihres wellenförmigen Verlaufes in axialer Richtung A des Reifens über eine das Profilband (3) begrenzende Umfangsrille (6) hinweg ein entsprechendes Paar (14) von Feineinschnitten (15,16) in der radial äußeren Oberfläche (8) eines weiteren durch die Umfangsrille (6) begrenzten Profilbandes (2) bildet.

10. Laufstreifenprofil gemäß den Merkmalen von einem oder mehreren der vorangegangenen Ansprüche 1 bis **9,**
wobei in der radial äußeren Oberfläche (8) des Profilbandes (3) ein weiteres Paar (11) von wellenförmig in Umfangsrichtung U ausgerichteten Feineinschnitten (12,13) mit gleicher Wellenlänge (L₁) und mit längs der Erstreckung in Umfangsrichtung U versetzter Phase ausgebildet ist, welches sich insbesondere über den gesamten Umfang des Reifens erstreckt, und
wobei der axiale Abstand der beiden in Umfangsrichtung U ausgerichteten Nulldurchgangslinien der beiden Wellenformen kleiner ist als ihre Amplitude, so dass sich die Feineinschnitte (12,13) über den Umfang des Reifens schneiden.

11. Laufstreifenprofil gemäß den Merkmalen von Anspruch **10,**
wobei die Schnittpunkte S₁ der Feineinschnitte (12,13) des weiteren Paars (11) von wellenförmig in Umfangsrichtung U ausgerichteten Feineinschnitten (12,13) zwischen den beiden Feineinschnitten (15,16) eines ersten Paares (14) von in axialer Richtung A erstreckten Feineinschnitten (15,16) ausgebildet ist.

12. Laufstreifenprofil gemäß den Merkmalen von einem oder mehreren der Ansprüche **10 oder 11,**
wobei die Paare (14,17) der in axialer Richtung A verlaufenden Feineinschnitte (15,16,18,19) jeweils in ihrem Tiefenverlauf derart ausgebildet sind, dass auf der zur einen Umfangsrille (7) hin gelegenen Seite der in eine Orientierungsrichtung in Umfangsrichtung gesehene erste der zwischen der Umfangsrille und dem nächstliegenden Schnittpunkt mit einem wellenförmigen in Umfangsrichtung U ausgerichteten Feineinschnitt angeordnete Erstreckungsabschnitt der beiden Feineinschnitte und auf der zur anderen Umfangsrille hin gelegenen Seite der in die gleiche Orientierungsrichtung in Umfangsrichtung gesehene zweite zwischen der Umfangsrille und dem nächstliegenden Schnittpunkt mit einem wellenförmigen in Umfangsrichtung U ausgerichteten Feineinschnitt angeordnete Erstreckungsabschnitt der beiden Feineinschnitte zumindest einem Erstreckungsabschnitt größerer radialer Erstreckungstiefe t₁ als im Rest der Erstreckung der beiden Feineinschnitte ausgebildet ist.

## Claims

1. Tread profile of a pneumatic vehicle tyre with profile bands (2, 3) made to extend over the circumference of the tyre - such as for example circumferential ribs or tread bar rows - which are arranged between two circumferential grooves (5, 6, 7), wherein a profile band (3) is respectively delimited in the axial direction A in relation to a circumferential groove (6, 7) delimiting the profile band (3) by a flank (9, 10), which forms the groove wall of the circumferential groove (6, 7) that is facing the profile band (3), and wherein the profile band (3) is delimited outwardly in the radial direction R by a radially outer surface (8) forming the ground contact surface, with sipes (15, 16, 18, 19) made to extend from circumferential groove (6) to circumferential groove (7) in the radially outer surface (8) at least of the profile band (3), wherein pairs (14) of sipes (15, 16) that are arranged adjacently one behind the other in the circumferential direction U and are made to extend in the axial direction A are formed in the radially outer surface (8) at least of the profile band (3) so as to follow a curved path opposite one another in the radially outer surface (8) along the axial extent from one circumferential groove (6) to the other circumferential groove (7),
**characterized**
**in that** two different pairs (14, 17) of sipes (15, 16, 18, 19) arranged adjacently one behind the other in the circumferential direction U are formed in the radially outer surface (8) of the profile band (3) so as to follow an oppositely curved path in the radially outer surface (8) along the axial extent from one circumferential groove (6) to the other circumferential groove (7) and are arranged distributed in an alternating sequence over the circumference of the tyre.

2. Tread profile according to the features of Claim 1, wherein the curved path of the two sipes (15, 16, 18, 19) of a pair (14, 17) respectively forms a portion of a wave form that is made to extend in the axial direction A and has an amplitude measured in the circumferential direction U.

3. Tread profile according to the features of Claim 2, wherein the curved path of the two sipes (15, 16, 18, 19) of a pair (14, 17) respectively forms a portion of a wave form of the same wave length (L₂, L₃), the portions being phase-offset in relation to one another.

4. Tread profile according to the features of Claim 2 or 3,
wherein the curved path of the two sipes respectively forms a portion of a wave form of the same amplitude, measured in the circumferential direction, the portions being phase-offset in relation to one another.

5. Tread profile according to the features of one or more of Claims 2, 3 or 4,
wherein the phase of one sipe (15, 18) is offset with respect to that of the other sipe (16, 19) by a phase angle π.

6. Tread profile according to the features of Claims 1, 2 and 5,
wherein the phase of one sipe (15) of the first pair (14) is formed offset with respect to one sipe (18) of the second pair (17) by a phase angle (π/2) and the phase of the second sipe (16) of the first pair (14) is formed offset with respect to the second sipe (19) of the second pair (17) by a phase angle (π/2).

7. Tread profile according to the features of Claim 6, wherein the two sipes (18, 19) of the second pair (17) in the radially outer surface (8) of the profile band (7) intersect - in particular at their point of inflection.

8. Tread profile according to the features of Claim 6, wherein the two sipes (15, 16) of the first pair (14) in the radially outer surface (8) of the profile band (3) do not intersect.

9. Tread profile according to the features of one or more of the preceding Claims 2 to 8,
wherein the two sipes (15, 16) of a pair (14) form in an extension of their wave-shaped path in the axial direction A of the tyre beyond a circumferential groove (6) delimiting the profile band (3) a corresponding pair (14) of sipes (15, 16) in the radially outer surface (8) of a further profile band (2) delimited by the circumferential groove (6).

10. Tread profile according to the features of one or more of the preceding Claims 1 to 9,
wherein a further pair (11) of sipes (12, 13), aligned in the form of a wave in the circumferential direction U, is formed in the radially outer surface (8) of the profile band (3) with the same wave length (L₁) and with a phase offset along the extent in the circumferential direction U, the pair being made to extend in particular over the entire circumference of the tyre, and
wherein the axial distance apart of the two zero crossing lines of the two wave forms aligned in the circumferential direction U is less than their amplitude, so that the sipes (12, 13) intersect over the circumference of the tyre.

11. Tread profile according to the features of Claim 10,
wherein the points of intersection S₁ of the sipes (12, 13) of the further pair (11) of sipes (12, 13) aligned in the form of waves in the circumferential direction U are formed between the two sipes (15, 16) of a first pair (14) of sipes (15, 16) made to extend in the axial direction A.

12. Tread profile according to the features of one or both of Claims 10 and 11,
wherein the pairs (14, 17) of sipes (15, 16, 18, 19) running in the axial direction A are respectively formed in their depth progression in such a way that, on the side situated towards the one circumferential groove (7) of the first portion of extent of the two sipes, as seen in the direction of orientation in the circumferential direction, that is arranged between the circumferential groove and the nearest point of intersection with a wave-shaped sipe aligned in the circumferential direction U and on the side situated towards the other circumferential groove of the second portion of extent of the two sipes, as seen in the same direction of orientation in the circumferential direction, that is arranged between the circumferential groove and the nearest point of intersection with a wave-shaped sipe aligned in the circumferential direction U, there is formed at least one portion of extent of a greater radial depth of extent t₁ than in the remainder of the extent of the two sipes.

## Revendications

1. Profil de bande de roulement pour bandage pneumatique de roue de véhicule, présentant des bandes profilées (2, 3) s'étendant sur la périphérie du bandage de roue, par exemple des nervures périphériques ou des rangées de blocs profilés, disposées entre deux rainures périphériques (5, 6, 7),
une bande profilée (3) étant délimitée dans la direction axiale A, en direction d'une rainure périphérique (6, 7) délimitant la bande profilée (3), par un flanc (9, 10) respectif qui forme la paroi de la rainure périphérique (6, 7) orientée vers la bande profilée (3),
la bande profilée (3) étant limitée vers l'extérieur dans la direction radiale R par une surface radialement extérieure (8) qui forme une surface de contact avec le sol,
de fines entailles (15, 15, 18, 19) s'étendant d'une rainure périphérique (6) à une rainure périphérique (7) étant formées dans la surface radialement extérieure (8) d'au moins la bande profilée (3),
des paires (14) de fines entailles (15, 16) successives dans la direction périphérique U et s'étendant dans la direction axiale A étant formées dans la surface radialement extérieure (8) d'au moins la bande profilée (3) et présentant dans l'extension axiale de la surface radialement extérieure (8) des formes courbes opposées l'une à l'autre et s'étendant d'une rainure périphérique (6) à l'autre rainure périphérique (7),
**caractérisé en ce que**
deux paires différentes (14, 17) de fines entailles (15, 16, 18, 19) successives dans la direction périphérique U et présentant dans leur extension axiale dans la surface radialement extérieure (8) des formes courbes opposées l'une à l'autre d'une rainure périphérique (6) à l'autre rainure périphérique (7) étant formées dans la surface radialement extérieure (8) de la bande profilée (3) et étant disposées en succession alternée suivant la périphérie du bandage de roue.

2. Profil de bande de roulement selon les caractéristiques de la revendication 1, dans lequel la forme courbe des deux fines entailles (15, 16, 18, 19) d'une paire (14, 17) forme une partie d'une forme ondulée s'étendant dans la direction axiale A et dont l'amplitude est mesurée dans la direction périphérique U.

3. Profil de bande de roulement selon les caractéristiques de la revendication 2, dans lequel les formes courbes des deux fines entailles (15, 16, 18, 19) d'une paire (14, 17) forment des parties mutuellement déphasées d'ondulations de même longueur d'onde (L₂, L₃).

4. Profil de bande de roulement selon les caractéristiques des revendications 2 ou 3, dans lequel les formes courbes des deux fines entailles forment des parties mutuellement déphasées d'ondulations de même amplitude dans la direction périphérique.

5. Profil de bande de roulement selon les caractéristiques d'une ou plusieurs des revendications 2, 3 ou 4, dans lequel la phase de la fine entaille (15, 18) est décalée d'un angle π par rapport à delle de l'autre fine entaille (16, 19).

6. Profil de bande de roulement selon les caractéristiques des revendications 1, 2 et 5, dans lequel la phase d'une fine entaille (15) de la première paire (14) est décalée d'un angle de phase (π/2) par rapport à celle d'une fine entaille (18) de la deuxième paire (17) et la phase de la deuxième fine entaille (16) de la première paire (14) est déphasée d'un angle de phase (π/2) par rapport à celle de la deuxième fine entaille (19) de la deuxième paire (17).

7. Profil de bande de roulement selon les caractéristiques de la revendication 6, dans lequel les deux fines entailles (18, 19) de la deuxième paire (17) se coupent dans la surface radialement extérieure (8) de la bande profilée (7) et en particulier en leur point d'inversion.

8. Profil de bande de roulement selon les caractéristiques de la revendication 6, dans lequel les deux fines entailles (15, 16) de la première paire (14) ne se coupent pas dans la surface radialement extérieure (8) de la bande profilée (3).

9. Profil de bande de roulement selon les caractéristiques d'une ou plusieurs des revendications 2 à 8 qui précèdent, dans lequel par l'intermédiaire d'une rainure périphérique (6) qui délimite la bande profilée (3), les deux fines entailles (15, 16) d'une paire (14) forment dans le prolongement de leur forme ondulée dans la direction axiale A du bandage de roue une paire correspondante (14) de fines entailles (15, 16) dans la surface radialement extérieure (8) d'une autre bande profilée (2) délimitée par la rainure périphérique (6).

10. Profil de bande de roulement selon les caractéristiques d'une ou plusieurs des revendications 1 à 9, dans lequel une autre paire (11) de fines entailles (12, 13) orientées en forme ondulée dans la direction périphérique U et présentant la même longueur d'onde (L₁) et une phase décalée le long de leur extension dans la direction périphérique U est formée dans la surface radialement extérieure (8) de la bande profilée (3) et s'étend en particulier sur toute la périphérie du bandage de roue, la distance axiale entre les deux lignes de passage par zéro des deux formes ondulées orientées dans la direction périphérique U étant inférieure à leur amplitude, de sorte que les fines entailles (12, 13) se coupent sur la périphérie du bandage de roue.

11. Profil de bande de roulement selon les caractéristiques de la revendication 10, dans lequel le point de coupe S₁ des fines entailles (12, 13) de l'autre paire (11) de fines entailles (12, 13) orientées de forme ondulée dans la direction périphérique U est formé entre les deux fines entailles (15, 16) d'une première paire (14) de fines entailles (15, 16) s'étendant dans la direction axiale A.

12. Profil de bande de roulement selon les caractéristiques d'une ou plusieurs des revendications 10 ou 11, dans lequel la profondeur des paires (14, 17) des fines entailles (15, 16, 18, 19) s'étendant dans la direction axiale A évolue de telle sorte que sur le côté situé vers une rainure périphérique (7), la partie d'extension située en premier dans la direction d'orientation de la direction périphérique, disposée entre la rainure périphérique et le point de concours le plus proche avec une fine entaille de forme ondulée orientée dans la direction périphérique U, des deux fines entailles, et que sur le côté situé vers l'autre rainure périphérique, la partie d'extension des deux fines entailles, située en deuxième dans la même direction d'orientation de la direction périphérique entre la rainure périphérique et le point de concours le plus proche avec une fine entaille de forme ondulée orientée dans la direction périphérique U, présentent au moins une partie d'extension de plus grande profondeur radiale t₁ que dans le reste de l'extension des deux fines entailles.
